# EUROPÄISCHE PATENTSCHRIFT

(11) **EP 0 972 219 B1**
(45) Veröffentlichungstag und Bekanntmachung des Hinweises auf die Patenterteilung: **09.08.2006**
(21) Anmeldenummer: 99903609.8
(22) Anmeldetag: 07.01.1999
(51) Int. Cl.: G02B 6/42, H01L 31/0203

(54) **LICHTLEITERVERBINDUNG MIT EINEM LICHTEMPFÄNGER**
CONNECTION BETWEEN A LIGHT GUIDE AND A LIGHT RECEIVER
CONNEXION ENTRE UNE FIBRE OPTIQUE ET UN RECEPTEUR OPTIQUE

(30) Priorität: 28.01.1998 DE 19803225
(43) Veröffentlichungstag der Anmeldung: 19.01.2000
(73) Patentinhaber: LITEF GmbH, 79115 Freiburg (DE)
(72) Erfinder: BÜSCHELBERGER, Hanns, J., D-79199 Kirchzarten (DE); PLA-IBANEZ, Antonio, D-79100 Merzhausen (DE)
(74) Vertreter: Müller, Frithjof E.
(86) Internationale Anmeldenummer: PCT/EP1999/000059
(87) Internationale Veröffentlichungsnummer: WO 1999/039230

(56) Entgegenhaltungen:
- GB-A- 1 304 428
- JP-A- 56 079 468
- US-A- 4 329 190
- US-A- 4 709 979
- PATENT ABSTRACTS OF JAPAN vol. 009, no. 329 (P-416), 24. Dezember 1985 & JP 60 156023 A (TATEISHI DENKI KK), 16. August 1985
- PATENT ABSTRACTS OF JAPAN vol. 005, no. 103 (E-064), 3. Juli 1981 & JP 56 046573 A (HITACHI LTD), 27. April 1981

## Beschreibung

Die Erfindung betrifft die Verbindung zwischen einem Lichtleiter und einem Lichtempfänger, der einen gekapselten, hinter einem lichtdurchlässigen Fenster angeordneten lichtempfindlichen Wandler aufweist, wobei ein stirnseitiges Ende des Lichtleiters vor dem Fenster der Kapsel fixiert und mit letzterer fest verbunden ist.

Lichtempfänger, wie sie in faseroptischen Systemen verwendet werden, sind in der Regel in zylindrischen Metallgehäusen gekapselt untergebracht. Die lichtempfindliche Wandlerfläche ist in möglichst geringem Abstand hinter einem in der Oberseite des Metallgehäuses bzw. der Kapsel befindlichen Glasfenster angeordnet. Im einfachsten Fall ist das stirnseitige Ende des Lichtleiters stumpf auf die Fensterfläche dieses so gebildeten Detektorgehäuses aufgesetzt und verklebt. Bei aufwendigeren Konstruktionen ist vorgesehen, den Lichtleiter in das Innere des Detektorgehäuses zu führen. Die Gehäusedurchführung muß durch eine technisch relativ schwierige Klebe- oder Löttechnik abgedichtet werden.

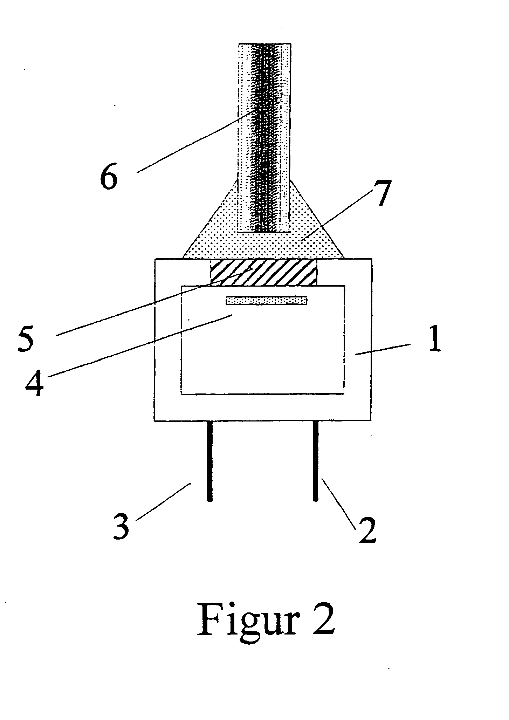

Die Fig. 2 der beigefügten Zeichnungen zeigt eine solche bekannte Lichtleiterverbindung zu einem Lichtempfänger gemäß dem Stand der Technik. In einer Kapsel 1 mit elektrischen Anschlüssen 2 und 3 ist ein flächiger lichtempfindlicher Wandler 4 hinter einem lichtdurchlässigen Fenster 5 angeordnet. Das stirnseitige Ende des Lichtleiters 6 ist mittels eines Klebstoffs 7 vor dem Fenster 5 befestigt.

Bei vielen faseroptischen Systemen muß die in Lichtleitern geführte Lichtstrahlung möglichst verlustfrei dem opto-elektrischen Wandler zugeführt werden, um die dem Licht aufgeprägte Information auswertbar zu machen. Dabei ist eine stabile Verbindung zwischen dem Lichtleiter und dem Lichtempfänger herzustellen. Die Kopplung zwischen dem Lichtleiter und dem Empfänger, also dem Wandler soll sich unter wechselnden Umwelteinflüssen nicht oder möglichst geringfügig ändern.

Die bekannte anhand der Fig. 2 erläuterte einfache Verklebung des Lichtleiters 6 auf dem Glasfenster 5 der Detektorkapsel 1 leidet an zu geringer Stabilität. Bei Biegung des flexiblen Lichtleiters 6 entsteht leicht ein Schaden an der Verbindung. Auch kann die Ausrichtung des aus dem Lichtleiter austretenden Lichts unter Biegung so verändert werden, daß ein Teil der Lichtleistung die lichtempfindliche Oberfläche des Wandlers 4 nicht mehr trifft.

Sieht man andererseits eine Ausführungsform mit Gehäusedurchführung vor, so erfordert dies jeweils eine spezielle Konstruktion des aus Wandler und Gehäuse bestehenden Bauteils. In vielen Fällen können Standarddetektoren in zylindrischen Gehäusen mit Glasfenster nicht verwendet werden.

Der Erfindung liegt damit die Aufgabe zugrunde, eine sichere mechanische sowie elektrisch stabile Verbindung zwischen einem Lichtleiter und einem opto-elektrischen Wandler zu schaffen, die sich möglichst kostengünstig unter Verwendung kommerziell erhältlicher Teile und unter Verzicht auf Spezialteile realisieren läßt.

Eine Lichtleiterverbindung mit einem Lichtempfänger der beschriebenen und im Oberbegriff des Patentanspruchs 1 definierten Gattung ist erfindungsgemäß dadurch gekennzeichnet, daß ein kapselseitiges Endstück des Lichtleiters in eine auf der Oberfläche des Fensters fixierte kapillarartige Manschette eingeführt und darin verklebt ist, und daß die Manschette von einer den fensterseitigen Kapselrand überlappenden Knickschutzhülse umgeben ist, die innenseitig im Bereich des von der Manschette umgebenen Lichtleiteranschlusses mit einer Vergußmasse gefüllt ist.

Vorzugsweise ist der Lichtleiter, in dem die kapillarartige Manschette durchsetzenden Endbereich von seiner Ummantelung befreit. Besonders kostenkünstig ist es, die den Anschlußbereich umgebende Knickschutzhülse aus einem Stück eines schrumpffähigen Schlauchs herzustellen, der im Überlappungsbereich mit der Kapsel durch Wärmeschrumpfung fixiert ist.

Die Gehäuseform der die lichtempfindliche Wandlerfläche enthaltenden Kapsel mit Glasfenster muß nicht zwangsläufig zylindrisch sein. Das zu fixierende Ende des Lichtleiters ist in ein Stück einer Kapillare, hier als kapillarartige Manschette bezeichnet, eingebettet, die aus einem Werkstoff besteht, der vorzugsweise ein ähnliches Wärmeausdehnungsverhalten aufweist, wie das Material des Lichtleiters. In der Regel finden Lichtleitfasern als Lichtleiter Verwendung, die vorzugsweise aus Quarzglas oder Kunststoff bestehen und mit einer Ummantelung aus Kunststoffmaterial umgeben sind. Der Lichtleiter sollte im Endbereich, der in die kapillarartige Manschette eingeführt wird, von der Ummantelung befreit sein. In der Manschette wird der Lichtleiter mittels Klebstoffs befestigt. Die Verklebung des Lichtleiters in der Manschette und der gemeinsamen Baugruppe aus Lichtleiter und Manschette auf der Fensteroberfläche der Detektorkapsel kann in einem Arbeitsgang erfolgen. Bevor die genannte Baugruppe durch Aushärtung der Klebeverbindung fixiert wird, ist sie durch ein Ausrichtverfahren so zu justieren, daß ein Maximum der möglichen Lichtleistung auf die lichtempfindliche Fläche des Wandlers trifft.

Die so erzielte Anordnung wird durch einen zusätzlichen Knickschutz so stabilisiert, daß die Verbindung robust genug ist, um ohne Beschädigungen gehandhabt werden zu können.

Erfindungsgemäß wird der Knickschutz dadurch erreicht, daß um das Detektorgehäuse eine Hülse gelegt wird, die über die Kapselkante hinausragt und Teile der Lichtleiterankopplung umgibt. Der so gebildete Topf kann mit einer Vergußmasse ausgefüllt werden, die der kapillarartigen Maschette eine ausreichende seitliche Abstützung sichert. Vorteilhaft ist es, die Knickschutzhülse aus einem Stück eines Schrumpfschlauchs zu fertigen. Nachdem der Topfbereich beispielsweise mit einer plastischen Vergußmasse aufgefüllt ist, wird das Schrumpfschlauchstück durch Erhitzen eng um die Bauteilgruppe schrumpfgepreßt.

Bei zweckentsprechend angepaßter Auswahl der Werkstoffe erreicht eine erfindungsgemäße Lichtleiterverbindung eine ausgezeichnete Robustheit gegen Temperaturveränderung, Feuchtigkeit, Vibration und Schock.

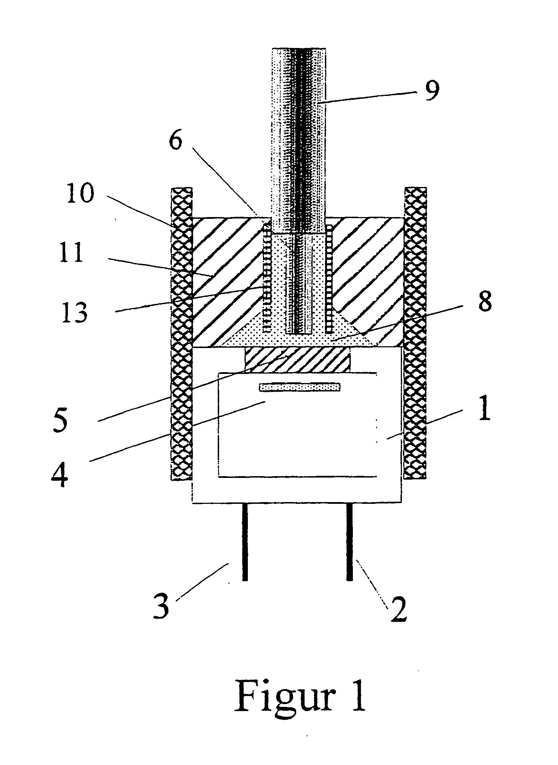

Eine Ausführungsform der Erfindung wird nachfolgend unter Bezug auf die Figur 1 beschrieben, wobei gleichartige Bauteile, die aus Fig. 2 schon bekannt sind, mit den gleichen Bezugshinweisen gekennzeichnet sind.

In der Kapsel 1 mit den elektrischen Anschlüssen 2 und 3 ist wiederum der lichtempfindliche Wandler 4 enthalten, dessen lichtempfindliche Wandlerfläche auf das lichtdurchlässige Fenster 5 in der Kapsel 1 ausgerichtet ist. Auf der Außenseite des Fensters 5 ist der Lichtleiter 6 in eine kapillarartige Manschette 13 eingeführt und mittels Klebstoffs 8 befestigt. Der Lichtleiter 6 ist im Falle einer ummantelten Lichtleitfaser im Bereich der Manschette 13 von seiner Ummantelung 9 befreit. Eine Knickschutzhülse 10 umgibt die Kapsel 1 zumindest teilweise. Der Zwischenraum zwischen der Manschette 7 und der Knickschutzhülse 10 ist mit einer Vergußmasse 11 aufgefüllt. Die vorzugsweise aus einem Stück eines Schrumpfschlauchs bestehende Knickschutzhülse 10 wird durch Wärmeschrumpfung auf bzw. an der Kapsel 1 fixiert.

## Patentansprüche

1. Verbindung zwischen einem Lichtleiter (6) und einem Lichtempfänger. der einen gekapselten, hinter einem lichtdurchlässigen Fenster (5) angeordneten lichtempfindlichen Wandler (4) aufweist, wobei ein stirnseitiges Ende des Lichtleiters (6) vor dem Fenster (5) der Kapsel (1) fixiert und mit letzterer fest verbunden ist, **dadurch gekennzeichnet, daß** ein kapselseitiges Endstück des Lichtleiters (6) in eine auf der Oberfläche des Fenster (5) fixierte kapillarartige Manschette (7) eingeführt und darin verklebt ist, und daß die Manschette von einer den fensterseitigen Kapselrand überlappenden Knickschutzhülse (10) umgeben ist, die innenseitig im Bereich des von der Manschette (13) umgebenen Lichtleiteranschlusses mit einer Vergußmasse (11) gefüllt ist.

2. Lichtleiterverbindung nach Anspruch 1, **dadurch gekennzeichnet, daß** der Lichtleiter (6) im Bereich der Manschette (13) von seiner Ummantelung (9) befreit ist.

3. Lichtleiterverbindung nach Anspruch 1 oder 2, **dadurch gekennzeichnet, daß** die Knickschutzhülse (10) aus einem Stück eines schrumpffähigen Schlauchs besteht, der im Überlappungsbereich mit der Kapsel (1) durch Wärmeschrumpfung fixiert ist.

4. Lichtleiterverbindung nach einem der vorstehenden Ansprüche, **dadurch gekennzeichnet, daß** der Lichtleiter (6) aus Quarzglas oder aus Kunststoff besteht.

5. Lichtleiterverbindung nach einem der vorstehenden Ansprüche, **dadurch gekennzeichnet, daß** die kapillarartige Manschette (13) aus einem Werkstoff besteht. dessen Wärmeausdehnungsverhalten an das des Lichtleiters (6) angepaßt ist.

6. Lichtleiterverbindung nach einem der vorstehenden Ansprüche, **dadurch gekennzeichnet, daß** die Verklebung von Lichtleiter (6) und Lichtempfängerkapsel (1) mit einem lichthärtenden Klebstoff ausgeführt ist.

## Claims

1. Connection between an optical waveguide (6) and an optical receiver, which has an encapsulated light-sensitive converter (4) arranged behind a translucent window (5), one front end of the optical waveguide (6) being secured in front of the window (5) of the encapsulation (1) and being permanently connected to the latter, **characterized in that** an encapsulation-end end element of the optical waveguide (6) is introduced into a capillary-like collar (7) which is secured to the surface of the window (5), and said end element is bonded in the collar (7), and **in that** the collar is surrounded by an anti-kink protective sleeve (10) which overlaps the window-end edge of the encapsulation and is filled on the inside with a sealing compound (11) in the vicinity of the optical waveguide connection which is surrounded by the collar (13)

2. Optical waveguide connection according to Claim 1, **characterized in that** the sheath (9) is removed from the optical waveguide (6) in the vicinity of the collar (1)

3. Optical waveguide connection according to Claim 1 or 2, **characterized in that** the anti-kink protective sleeve (10) is composed of a piece of a shrinkable hose which is secured to the encapsulation (1) in the overlapping region by means of thermal contraction.

4. Optical waveguide connection according to one of the preceding claims, **characterized in that** the optical waveguide (6) is composed of quartz glass or of plastic.

5. Optical waveguide connection according to one of the preceding claims, **characterized in that** the capillary-like collar (13) is composed of a material whose thermal expansion characteristics are matched to those of the optical waveguide (6).

6. Optical waveguide connection according to one of the preceding claims, **characterized in that** the bonding of optical waveguide (6) and optical receiver encapsulation (1) is carried out with a light-curing bonding agent.

## Revendications

1. Connexion entre une fibre optique (6) et un récepteur optique, qui présente un transducteur (4) encapsulé sensible à la lumière et disposé derrière une fenêtre (5) transparente, où une extrémité antérieure de la fibre optique (6) est fixée avant la fenêtre (5) de la capsule (1) et est reliée fixement à cette dernière, **caractérisée en ce qu'**une extrémité côté capsule de la fibre optique (6) est insérée dans un embout en forme de capillaire (7) fixé à la surface de la fenêtre (5) et y est collée, et **en ce que** l'embout est entouré par un manchon anti-pliage (1), qui est rempli d'une masse de remplissage (11) intérieurement dans la zone de la connexion de la fibre optique entourée par l'embout (13).

2. Connexion de fibre optique selon la revendication 1, **caractérisée en ce que** la fibre optique (6) est dégagée de son revêtement (9) dans la zone de l'embout (13).

3. Connexion de fibre optique selon la revendication 1 ou 2, **caractérisée en ce que** le manchon anti-pliage (10) se compose d'un morceau de tuyau rétractable, qui est fixé par contraction thermique dans la zone de recouvrement avec la capsule (1).

4. Connexion de fibre optique selon l'une des revendications précédentes, **caractérisée en ce que** la fibre optique (6) se compose de verre au quartz ou de matière synthétique.

5. Connexion de fibre optique selon l'une des revendications précédentes, **caractérisée en ce que** l'embout en forme de capillaire (13) se compose d'un matériau, dont le comportement à la dilatation thermique est approprié à celui de la fibre optique (6).

6. Connexion de fibre optique selon l'une des revendications précédentes, **caractérisée en ce que** le collage de la fibre optique (6) et de la capsule du récepteur optique (1) est réalisé avec une colle durcissant à la lumière.
